# EUROPÄISCHE PATENTSCHRIFT

(11) **EP 0 997 706 B1**
(45) Veröffentlichungstag und Bekanntmachung des Hinweises auf die Patenterteilung: **07.08.2002**
(21) Anmeldenummer: 99203510.5
(22) Anmeldetag: 25.10.1999
(51) Int. Cl.: G01D 5/16

(54) **Anordnung zur Messung einer relativen linearen Position**
Arrangement for determining a relative linear position
Dispositif pour mesurer une position relative linéaire

(30) Priorität: 28.10.1998 DE 19849613
(43) Veröffentlichungstag der Anmeldung: 03.05.2000
(73) Patentinhaber: Philips Corporate Intellectual Property GmbH, 52064 Aachen (DE); Koninklijke Philips Electronics N.V., 5621 BA Eindhoven (NL)
(72) Erfinder: Petersen, August, 52064 Aachen (DE)
(74) Vertreter: von Laue, Hanns-Ulrich

(56) Entgegenhaltungen:
- DE-A- 19 640 695
- PATENT ABSTRACTS OF JAPAN vol. 015, no. 088 (P-1174), 4. März 1991 (1991-03-04) & JP 02 306113 A (MATSUSHITA ELECTRIC IND CO LTD), 19. Dezember 1990 (1990-12-19)

## Beschreibung

Die Erfindung betrifft eine Anordnung zur Messung einer relativen linearen Position zwischen einem Sensor und einem magnetischen Körper, deren Position relativ zueinander in einer vorgegebenen Richtung linear veränderbar ist.

Eine derartige Anordnung ist aus der DE-OS 42 33 331 bekannt. Die dort offenbarte Anordnung weist einen Sensor mit zwei Sensorelementen auf, deren Signale mittels Meßbrücken ausgewertet werden. Es ist die relative lineare Position zu einem magnetischen Körper ermittelbar, welcher eine periodische Multipolstruktur aufweist. Die Sensoren messen eindimensional, d.h. sie messen in einer bestimmten Meßrichtung die Stärke des jeweils auftretenden Magnetfeldes. Bei einer Positionsänderung erfaßt der Sensor die Anzahl der Magnetpole aus dem Signal eines Meßelementes, die Bewegungsrichtung aus den Signalen beider Meßelemente und zusätzlich aus den Signalen beider Meßelemente die jeweils analoge Position im Bereich eines Magnetpoles. Die Anordnung kann nur bei wirklich optimaler Anpassung zwischen Sensor und Encoder ein Sinus-/Kosinus-Signal aus den beiden Sensoren verarbeiten. Ungenauigkeiten des Magnetfeldes, d.h. Abweichungen von der idealen Sinusform, die in der Praxis in der Regel auftreten, Phasen- und Magnetisierungsfehler der Magnetstruktur und unterschiedliche Empfindlichkeiten beider Sensorelemente haben erhebliche Einflüsse auf das von der Anordnung gelieferte Ergebnis. Die Anordnung liefert also nur unter in der Praxis kaum erzielbare Idealbedingungen das gewünschte Ergebnis, nämlich die genaue Angabe der linearen Position zwischen Sensor und magnetischen Körper.

Ferner ist aus Dokument D1 (JP-A-02 396 113) eine Anordnung zur Erzeugung eines Sinussignals bekannt, bei der eine sinusförmige Magnetspur, die auf einer Trommel angeordnet ist, an einem Hall-Sensor vorbeigeführt wird indem die Trommel in Drehung versetzt wird. Dies dient dazu, ein Sinussignal zu erzeugen. Es wird mittels des Hall-Sensors eine Auswertung der Flußdichte des Magnetfeldes vorgenommen.

Es ist Aufgabe der Erfindung, die eingangs genannte Anordnung dahingehend weiter zu entwickeln, daß sie mit möglichst geringem Aufwand ein möglichst gutes, d.h. genaues Ergebnis der linearen Position liefert und daß sie möglichst unabhängig gegen Schwankungen von Feldstärke und Temperatur sowie Abstandstoleranzen ist.

Diese Aufgabe ist erfindungsgemäß dadurch gelöst, daß der Sensor als magnetoresistiver Winkelsensor ausgebildet ist und daß als magnetischer Körper ein magnetischer Streifen vorgesehen ist, der ein Magnetpolpaar aufweist und der über seine Länge in variierendem Winkel verlaufende Magnetfeldlinien aufweist, so daß der Winkel des den magnetoresistiven Winkelsensor durchdringenden magnetischen Feldes von der relativen Position des magnetoresistiven Winkelsensors zu dem magnetischen Streifen abhängig ist und aus dem Ausgangssignal des magnetoresistiven Winkelsensors die relative Position ermittelbar ist.

Der magnetoresistive Winkelsensor arbeitet ausschließlich als Winkelsensor, d.h. der Widerstand wenigstens eines Sensorelementes in dem Sensor ändert sich mit der Richtung des magnetischen Feldes, das den Sensor durchströmt. Der magnetoresistive Sensor ist daher unempfindlich gegen Schwankungen der Feldstärke des ihn durchströmenden Magnetfeldes. Dies wiederum hat zur Folge, daß das Meßergebnis unabhängig von der Stärke des Magnetfeldes des magnetischen Körpers, des Abstandes zwischen Sensor und magnetischem Körper und unabhängig von der Temperatur ist. Der magnetische Streifen, relativ zu dem die Position des Sensor ermittelbar ist, weist ein Magnetpolpaar auf. Die Magnetisierung über die Länge des magnetischen Streifens ist dabei so vorgesehen, daß die Magnetfeldlinien betrachtet über die Länge des magnetischen Streifens in variierendem Winkel verlaufen. Damit ist aus dem Winkel der Feldlinien, die den Sensor durchströmen, die relative Position des Sensors zu dem magnetischen Körper ermittelbar.

Diese in ihrem Aufbau einfache Anordnung liefert durch eine Winkelmessung, die relativ störungsunempfindlich gegen äußere Einflüsse und Schwankungen der Magnetfeldstärke ist, ein recht genaues Ergebnis der relativen linearen Position zwischen Sensor und magnetischem Körper. Die Anordnung benötigt nicht, wie viele Anordnungen gemäß dem Stande der Technik, einen Stützmagneten zur Kallibrierung des Sensors. Ferner ist die Anordnung dadurch, daß der magnetoresistive Winkelsensor nur Winkel und keine Feldstärke mißt, unempfindlich gegen äußere Einflüsse, die sich unter besonderen Einbaubedingungen, beispielsweise in Fahrzeugen, oft ergeben.

Wie gemäß einer Ausgestaltung der Erfindung nach Anspruch 2 vorgesehen ist, ist der magnetische Streifen vorteilhaft als flacher Streifen ausgebildet, wobei der magnetoresistive Winkelsensor an einer Längsseite des magnetischen Streifens positioniert ist, so daß die ihn durchströmende Feldstärke maximal ist und der Sensor nur noch Winkel und keine Feldstärke mißt.

Vorteilhaft weist der magnetoresistive Winkelsensor, wie gemäß einer weiteren Ausgestaltung nach Anspruch 3 vorgesehen ist, zwei konzentrisch zueinander und um 45° zueinander gedrehte Sensorelemente auf. Damit wird der Vorteil erreicht, daß ein Magnetfeldwinkelbereich von ± 90° gemessen werden kann und dabei dieser mit hoher Auflösung und Genauigkeit erfaßt werden kann. Damit ist der Meßbereich der Anordnung auf relativ große mechanische Bereiche ausdehnbar, beispielsweise auf einen Meßbereich von 100 mm.

Für die Anordnung sind vorteilhaft bekannte Auswerteschaltungen für magnetoresistive Winkelsensoren einsetzbar, die vorteilhaft, wie gemäß einer weiteren Ausgestaltung nach Anspruch 4 vorgesehen ist, als integrierte Schaltungen ausgelegt sein können, welche den CORDIC-Algorithmus als einfache Methode zur Winkelbestimmung einsetzen.

Es kann je nach Einsatzzweck unter Umständen wünschenswert sein, die lineare Position über den gesamten Meßbereich hinweg nicht mit konstanter Genauigkeit zu erfassen, sondern vielmehr in bestimmten Bereichen eine erhöhte Genauigkeit der Messung der linearen Position zu erzielen. Dazu kann vorteilhaft, wie gemäß einer Ausgestaltung nach Anspruch 5 vorgesehen ist, die magnetische Kennfeldlinie über die Länge des magnetischen Streifens nichlinear verlaufen. Das heißt die Winkeländerung des Magnetfeldes kann in einigen Bereichen je Längeneinheit des magnetischen Streifens stärker variieren als in anderen Bereichen. Damit kann in den Bereichen, in denen die Winkeländerung des Magnetfeldes je Längeneinheit des magnetischen Streifens stärker variiert, eine erhöhte Meßgenauigkeit erzielt werden.

Nachfolgend wird ein Ausführungsbeispiel der Erfindung anhand der Zeichnung näher erläutert. Es zeigen:
Fig. 1 zwei Ansichten eines Ausführungsbeispiels der Erfindung mit einem magnetoresistiven Winkelsensor und einem magnetischen Streifen und
Fig. 2 eine Ansicht des Ausführungsbeispiels gemäß Fig. 1 mit variierter relativer linearer Position zwischen Sensor und Streifen.

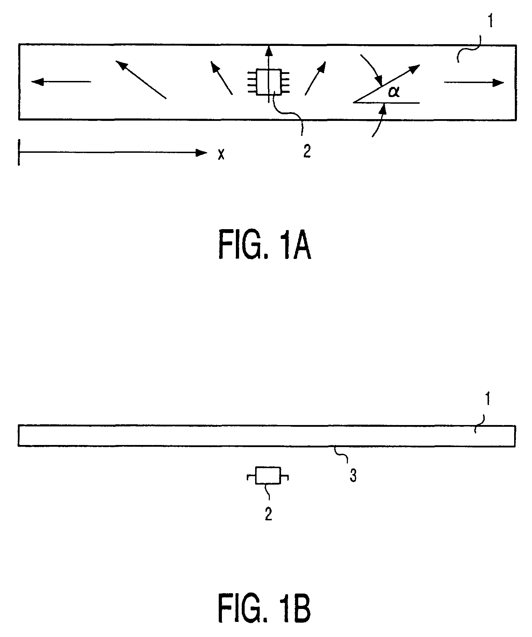

In Fig. 1A ist in Draufsicht ein magnetischer Streifen 1 schematisch dargestellt, welcher mit einem Magnetfeld magnetisiert ist, das ein Magnetfeldpolpaar aufweist. Dabei verlaufen die Feldlinien des Magnetfeldes betrachtet über die Längserstreckung des magnetischen Streifens 1 in variierendem Winkel. In der Figur ist für eine Feldlinie ein Winkel α angedeutet. Dieser Winkel α zwischen der Verlaufsrichtung der Feldlinie und der Richtung der Längserstreckung des magnetischen Streifens 1 ist, betrachtet über die Längserstreckung des magnetischen Streifens 1, für jede der Feldlinien verschieden.

Es ist in der Fig. 1A ferner ein magnetoresistiver Winkelsensor 2 angedeutet, welcher, obwohl er sich unterhalb des magnetischen Streifens 1 befindet, zur Verdeutlichung der Position dennoch als sichtbar in der Figur eingetragen ist.

Der magnetoresistive Winkelsensor 2 arbeitet im Bereich seiner Sättigung, d.h. das Meßsignal des magnetoresistiven Winkelsensors 2 ist ausschließlich abhängig vom Winkel des ihn durchströmenden Magnetfeldes, nicht jedoch von dessen Feldstärke. Ferner ist es weitgehend unabhängig von Temperaturschwankungen solange sich die die Feldrichtung nicht ändert.

Vorteilhaft ist der magnetoresistive Sensor 2 mit zwei konzentrisch angeordneten und in einem Winkel von 45° zueinander versetzten Sensorelementen ausgestattet. Als Funktion des Feldwinkels erzeugen derartige MR-Sensoren dann zwei gegeneinander um 90° phasenverschobene Signale. Aus dem Verhältnis dieser beiden Signale ergibt sich der Winkel, bzw. in der erfindungsgemäßen Anordnung die Position. Der abstands- und temperaturabhängige Signalpegel ist in Folge der Verhältnisbildung nicht von Einfluß. Der Sensor KMZ der Firma Philips, der zwei MR-Vollbrücken aufweist, ist ein Beispiel für derartige Sensoren.

Die relative Position zwischen dem magnetischen Streifen 1 und dem magnetoresistiven Sensor 2 ist linear in der in der Figur eingetragenen x-Richtung veränderbar und soll gemessen werden.

In Fig. 1B ist die Anordnung gemäß Fig. 1A in Seitenansicht dargestellt, aus der ersichtlich ist, daß der magnetische Streifen 1 relativ flach ausgebildet ist und daß der magnetoresistive Winkelsensor 2 unterhalb des magnetischen Streifens 1 angeordnet ist. Der magnetoresistive Winkelsensor 2 befindet sich somit gegenüber der Unterseite 3 des magnetischen Streifens 1.

Infolge der oben beschriebenen Eigenschaften des magnetoresistiven Winkelsensors spielt der Abstand zwischen dem magnetoresistiven Winkelsensor 2 und der Unterseite 3 des magnetischen Streifens für das Meßergebnis nur eine untergeordnete Rolle. Dies ist für viele Anwendungen von Vorteil, da der Abstand zwischen dem magnetoresistiven Winkelsensor 2 und dem magnetischen Streifen 1 je nach Anordnung unter Umständen in Grenzen variieren kann.

In der Darstellung gemäß Fig. 1A verläuft die Feldlinie des magnetischen Feldes des magnetischen Streifens etwa in einem Winkel α = 90° durch den magnetoresistiven Sensor 2. Aus den oben genannten Gründen spielen dabei die Feldstärke und auch Temperatureinflüsse so gut wie keine Rolle, so daß das Meßergebnis unbeeinflußt von äußeren Einflüssen ist.

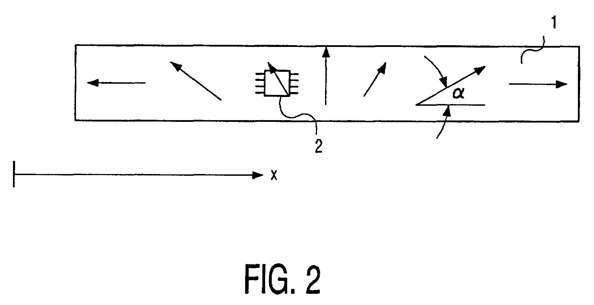

In Fig. 2 ist die Anordnung gemäß Fig. 1 in einer anderen Position des magnetischen Streifens 1 dargestellt. Der magnetische Streifen 1 ist in der eingetragenen x-Richtung gegenüber der in Fig. 1A dargestellten Position um einen bestimmten Weg linear bewegt worden. Es hat sich also die relative lineare Position zwischen magnetoresistivem Winkelsensor 2 und magnetischem Streifen 1 verändert.

Die schematische Darstellung gemäß Fig. 2 zeigt, daß infolge der Veränderung der relativen linearen Position dieser Elemente zueinander sich auch der Winkel α der Feldlinie des den magnetoresistiven Winkelsensors 2 durchströmenden Magnetfeldes geändert hat. In dem Beispiel gemäß Fig. 2 beträgt dieser Winkel α nunmehr etwa 130°.

Somit ist aus dem Meßsignal, das der magnetoresistive Winkelsensor 2 liefert, welches sich auf die Winkeländerung bezieht, unmittelbar ein Rückschluß auf die relative Position zwischen magnetoresistivem Winkelsensor 2 und dem magnetischen Streifen 1 rückschließbar, da die Verteilung der Winkel der Feldlinien über die Länge des magnetischen Streifens bekannt ist. Aus dem Winkel der Feldlinien des magnetischen Feldes, welches den magnetoresistiven Sensor 2 durchströmt, ist also auf die relative Position zwischen magnetoresistivem Sensor 2 und magnetischem Streifen 1 unmittelbar zu schließen.

Im Ergebnis ist die Anordnung also in der Lage, die relative lineare Position in x-Richtung zwischen dem magnetoresistivem Winkelsensor 2 und dem magnetischen Streifen 1 zu ermitteln. Die Anordnung ist dabei relativ einfach aufgebaut und dennoch unempfindlich gegen äußere Einflüsse.

Die Auswertung der Meßsignale, die der magnetoresistive Sensor 2 liefert, kann beispielsweise durch bekannte integrierte Schaltungen vorgenommen werden, wie diese beispielsweise unter der Typenbezeichnung UZZ 9000 von Philips vertrieben werden. Diese integrierten Schaltungen nehmen eine Auswertung des Signals vor und liefern ein Ergebnis, welches unmittelbar den Winkel des den Sensor durchströmenden Magnetfeldes angibt. Diese Schaltungen setzen den CORDIC-Algorithmus zur Bestimmung des Winkels ein, welcher eine recht gute Annäherung an den tatsächlichen Winkel liefert und eine relativ einfache Berechnung des Winkels gestattet.

## Patentansprüche

1. Anordnung zur Messung einer relativen linearen Position zwischen einem Sensor (2) und einem magnetischen Körper (1), deren Position relativ zueinander in einer vorgegebenen Richtung linear veränderbar ist, **dadurch gekennzeichnet,**
**daß** der Sensor (2) als magnetoresistiver Winkelsensor (2) ausgebildet ist und daß als magnetischer Körper ein magnetischer Streifen (1) vorgesehen ist, der ein Magnetpolpaar aufweist und der über seine Länge in variierendem Winkel verlaufende Magnetfeldlinien aufweist, so daß der Winkel des den magnetoresistiven Winkelsensor (2) durchdringenden magnetischen Feldes von der relativen Position des magnetoresistiven Winkelsensors (2) zu dem magnetischen Streifen (1) abhängig ist und aus dem Ausgangssignal des magnetoresistiven Winkelsensors (2) die relative Position ermittelbar ist.

2. Anordnung nach Anspruch 1, **dadurch gekennzeichnet,**
**daß** der magnetoresistive Winkelsensor (2) gegenüber einer flachen Längsseite (3) des magnetischen Streifens (1) positioniert ist.

3. Anordnung nach Anspruch 1, **dadurch gekennzeichnet,**
**daß** der magnetoresistive Winkelsensor (2) zwei in einem Winkel von 45 Grad konzentrisch zueinander angeordnete Sensorelemente aufweist.

4. Anordnung nach Anspruch 3, **dadurch gekennzeichnet,**
**daß** die Signale der beiden Sensorelemente in einer integrierten Schaltung ausgewertet werden, in welcher der CORDIC-Algorithmus zur Winkelbestimmung eingesetzt wird.

5. Anordnung nach Anspruch 1, **dadurch gekennzeichnet,**
**daß** die Kennline der Feldlinienrichtung der Magnetisierung des magnetischen Streifens (1) über dessen längserstreckung nichtlinear ist.

## Claims

1. An arrangement for measuring a relative linear position between a sensor (2) and a magnetic body (1), whose position relative to each other can be changed linearly in a predefined direction, **characterized in that** the sensor (2) is arranged as a magnetoresistive angle sensor (2) and **in that** a magnetic strip (1) is arranged as the magnetic body, which strip has a pair of magnetic poles and magnetic field lines running over its length at varying angles, so that the angle of the magnetic field penetrating the magnetoresistive angle sensor (2) depends on the relative position of the magnetoresistive angle sensor (2) to the magnetic strip (1) and the relative position can be computed from the output signal of the magnetoresistive angle sensor (2).

2. An arrangement as claimed in claim 1, **characterized in that** the magnetoresistive angle sensor (2) is positioned opposite a flat longitudinal side (3) of the magnetic strip (1).

3. An arrangement as claimed in claim 1, **characterized in that** the magnetoresistive angle sensor (2) has two sensor elements arranged concentrically to each other at an angle of 45 degrees.

4. An arrangement as claimed in claim 3, **characterized in that** the signals of the two sensor elements are evaluated in an integrated circuit in which the CORDIC algorithm is used for computing the angle.

5. An arrangement as claimed in claim 1, **characterized in that** the characteristic curve of the field line direction of the magnetization of the magnetic strip (1) is non-linear over its longitudinal reach.

## Revendications

1. Dispositif de mesure d'une position linéaire relative entre un capteur (2) et un corps magnétique (1) dont les positions réciproques peuvent varier linéairement dans une direction préalablement déterminée, **caractérisé en ce,**
**que** le capteur (2) est conçu comme un capteur angulaire magnétorésistif (2) et qu'une bande magnétique (1) est prévue comme corps magnétique et présente une paire de pôles magnétiques et des lignes de champ magnétique s'étendant sur sa longueur dans un angle variable de telle sorte que l'angle du champ magnétique pénétrant dans le capteur angulaire magnétorésistif (2) dépend de la position relative du capteur angulaire magnétorésistif (2) vers la bande magnétique (1) et la position relative peut être déterminée à partir du signal de sortie du capteur angulaire magnétorésistif (2).

2. Dispositif selon la revendication 1, **caractérisé en ce,**
**que** le capteur angulaire magnétorésistif (2) est positionné par rapport à une surface longitudinale plane (3) de la bande magnétique (1).

3. Dispositif selon la revendication 1, **caractérisé en ce,**
**que** le capteur angulaire magnétorésistif (2) présente deux éléments de capteur disposés concentriquement dans un angle de 45° l'un par rapport à l'autre.

4. Dispositif selon la revendication 3, **caractérisé en ce,**
**que** les signaux des éléments de capteur sont évalués dans un circuit intégré dans lequel l'algorithme CORDIC est utilisé pour la détermination de l'angle.

5. Dispositif selon la revendication 1, **caractérisé en ce,**
**que** la caractéristique de la direction des lignes de champ de la magnétisation de la bande magnétique (1) n'est pas linéaire sur sa longueur.
